# EUROPEAN PATENT APPLICATION

(11) **EP 4 686 058 A1**
(43) Date of publication of application: **28.01.2026**
(21) Application number: 24191224.5
(22) Date of filing: 26.07.2024
(51) Int. Cl.: H02M 1/00, H02M 3/335

(54) **ISOLATED DC/DC POWER CONVERTER**

(71) Applicant: Siemens Aktiengesellschaft, 80333 München (DE)
(72) Inventor: Mondal, Gopal, 91058 Erlangen (DE); Nielebock, Sebastian, 91301 Forchheim (DE)
(74) Representative: Siemens Patent Attorneys

(57) **Abstract**

An isolated DC/DC power converter arranged for power conversion between prima-ry side DC terminals and secondary side DC terminals, comprising:
- a capacitor series of two capacitors arranged between the primary side DC termi-nals of the power converter,
- three first half-bridges of two semiconductor switches each, the half-bridges being arranged in a parallel connection between the upper primary side DC terminal and the midpoint of the capacitors,
- three second half-bridges of two semiconductor switches each, each second half bridge being connected between the lower primary side DC terminal and the mid-point of a respective first half-bridge,
- a three-phase transformer, its primary side being connected to the midpoints of the second half-bridges,
- a rectifier circuit connected to the secondary side of the transformer,
- a control circuit configured to
-- operate the semiconductor switches of the half-bridges to create an AC voltage on the primary side of the transformer using a first operating mode and a second operating mode,
-- in the first operating mode, create the AC voltage by alternating between two or more voltage levels at the midpoints of the second half-bridges that include the voltages at the primary side DC terminals,
-- in the second operating mode, create the AC voltage by alternating between two voltage levels at the midpoints of the second half-bridges that have a voltage differ-ence of half the voltage between the primary side DC terminals.

## Description

The present invention relates to an isolated DC/DC power converter.

Isolated DC/DC converters are electronic devices that provide electrical isolation between the input and output circuits while converting the input voltage to a differ-ent output voltage level. They may be bidirectional, removing the distinction be-tween input and output voltage. They are widely used in various applications such as power supplies for electronic devices, renewable energy systems, electric vehi-cles, and industrial automation.

These converters typically consist of an input stage, isolation stage, and output stage. The input stage converts the input voltage to an AC voltage, which is then transferred through the isolation stage using a transformer. The output stage then rectifies and possibly filters the received AC voltage to provide the desired output voltage.

It is established that the best efficiency of a DC/DC converter is achieved when the ration of the input and output voltages correspond to the turn ratio of the trans-former. Thus, the turn ratio of isolated DC/DC converters is typically chosen to fit the operating voltages that the converter will be operating at most of the time. How-ever, any deviation from this ideal voltage ratio reduces its efficiency.

To deal with varying input and output voltages, DC/DC converters may be con-structed with a separate voltage variation stage, e.g. a buck/boost or PFC, thus in-creasing the complexity of the converter.

It is an object of the present invention to provide an isolated DC/DC power converter that has an improved tolerance of a varying ratio of the input and output voltages.

A solution is provided by the DC/DC converter according to claim 1.

The isolated DC/DC power converter according to the invention is arranged for power conversion between primary side DC terminals and secondary side DC ter-minals. It comprises a capacitor series of two capacitors arranged between the primary side DC terminals of the power converter.

It further comprises three first half-bridges of two semiconductor switches each, the first half-bridges being arranged in a parallel connection between the upper primary side DC terminal and the midpoint of the capacitors.

It further comprises three second half-bridges of two semiconductor switches each, each second half bridge being connected between the lower primary side DC termi-nal and the midpoint of a respective first half-bridge. This means that the midpoint of a first of the first half-bridges is connected to the upper terminal of a first of the second half-bridges, the midpoint of a second of the first half-bridges is connected to the upper terminal of a second of the second half-bridges and likewise for the remaining half-bridges.

It further comprises a three-phase transformer, its primary side being connected to the midpoints of the second half-bridges and a rectifier circuit connected to the secondary side of the transformer.

It further comprises a control circuit. The control circuit is configured to operate the semiconductor switches of the half-bridges to create an AC voltage on the primary side of the transformer using a first operating mode and a second operating mode. In the first operating mode, the control circuit is configured to create the AC voltage by alternating between two or more voltage levels at the midpoints of the second half-bridges that include the voltages at the primary side DC terminals. In the sec-ond operating mode, the control circuit is configured to create the AC voltage by alternating between two voltage levels at the midpoints of the second half-bridges that have a voltage difference of half the voltage between the primary side DC terminals.

Advantageously, this allows the power converter to work with two different effective input voltages. In the first operating mode, the input voltage difference VDC at the primary side DC terminals is fully applied at the midpoints of the second half-bridges and therefore, in the form of an AC voltage, at the primary side of the trans-former.

In the second operating mode, only half the input voltage VDC/2 is applied at the midpoints of the second half-bridges and therefore, in the form of an AC voltage, at the primary side of the transformer.

Thus, the present converter can achieve an optimal efficiency at two ratios of out-put over input voltage rather than at only one. As a result, the efficiency for a whole range of voltage ratios is higher than it is for a common DC/DC converter (any ratio that is closer to 2·VO/VDC than to VO/VDC).

Further features that may be added alone or together in exemplary embodiments of the invention include:
The control circuit may be configured to, in the second operating mode, create the AC voltage by alternating between exactly two voltage levels at the midpoints of the second half-bridges that are the DC voltage at the lower primary side DC terminal and the voltage of one of the capacitors. In other words, in this case the second op-erating mode exclusively uses a voltage difference of only VDC/2 at the primary side.

The control circuit may be configured to, in the first operating mode, create the AC voltage by alternating between exactly two voltage levels at the midpoints of the second half-bridges that are the voltages at the primary side DC terminals. In this embodiment, the first operating mode uses a two-level switching scheme that alter-nates between the voltages at the primary side DC terminals exclusively.

Alternatively, the control circuit may be configured to, in the first operating mode, create the AC voltage by alternating between exactly three voltage levels at the midpoints of the second half-bridges that are the voltages at the primary side DC terminals and the voltages of the capacitors. In this embodiment, first operating mode uses a three-level switching scheme that alternates between the voltages at the primary side DC terminals and also uses an intermediate voltage level.

The control circuit may be configured to, in the second operating mode, apply the voltage of one of the capacitors by operating the semiconductor switches of either the first half-bridges or the second half-bridges at a first switching frequency of at least 1 kHz. Typical values for the first switching frequency are 10 kHz, 16 kHz or 28 kHz. The switching frequency may also change during operation. In other words, the converter operates in this embodiment by either switching the first half-bridges at the first switching frequency or the second half-bridges at the first switching fre-quency, but not both sets of half-bridges.

The control circuit may further be configured to, in the second operating mode, al-ternate between switching the first half-bridges or the second half-bridges to keep the capacitors at a substantially equal voltage. Alternating between these two states may typically be done with a second frequency that is lower than the first switching frequency, particularly lower than 1 kHz. In this way, the capacitors of the capacitor series can be kept in a balanced state of each having, ideally, a voltage of VDC/2. The control circuit may be configured to measure the voltage, e.g. at the point be-tween the capacitors to determine times to alternate.

The control circuit may further be configured to, in the second operating mode, al-ternate between the voltage levels at the terminals of the upper capacitor by switch-ing the semiconductor switches of the first half-bridges at the first switching fre-quency, turning on the upper switches of the second half-bridges and turning off the lower switches of the second half-bridges. The state of the second half-bridges ef-fectively connects the midpoints of the first half-bridges directly to the midpoints of the second half-bridges and allows voltage control by the first half-bridges. Those are arranged parallel to the upper capacitor and therefore switch between the volt-ages at this capacitor's terminals.

The control circuit may further be configured to, in the second operating mode, al-ternate between the voltage levels at the terminals of the lower capacitor by switch-ing the semiconductor switches of the second half-bridges at the first switching frequency, turning on the lower switches of the first half-bridges and turning off the upper switches of the first half-bridges. Here, the state of the first half-bridges effec-tively connects the midpoint of the capacitors, i.e. the upper terminal of the lower capacitor, directly to the upper terminals of the second half-bridges. This effectively creates a parallel connection of the second half-bridges to the lower capacitor and allows voltage control by the second half-bridges.

The control circuit may be configured to select the operating mode based on the input voltage and output voltage at the primary side and secondary side DC termi-nals, particularly based on a comparison between the ratios of input and output voltage for both operating modes with the turn ratio of the transformer.

The rectifier circuit may be a diode bridge. This simplifies the setup of the DC/DC converter but makes it unidirectional. In this case the primary side DC terminals form input terminals and the secondary side DC terminals form output terminals of the DC/DC converter.

Alternatively, the rectifier circuit may be an active rectifier. With an active three-phase rectifier circuit, the DC/DC converter is a bi-directional converter. In this case there is no distinction between the primary side DC terminals and the secondary side DC terminals as both can be input and output terminals. Particularly the con-verter may have a substantially symmetrical setup in the secondary side using the same structure as the primary side.

The DC/DC power converter may be configured to use the first and/or second oper-ating mode for length of time that is substantially longer than a switching period of the first switching frequency. That length of time may be at least 0.1 seconds, or at least 1 s or at least 10 s.

It is to be understood that in some embodiments the elements described as "semi-conductor switches" of the power converter are individual semiconductor elements, i.e. single switches each. In other embodiments some or each of the elements de-scribed as "semiconductor switches" of the power converter are multiple switches arranged in a parallel or serial connection and acting together as if they were a sin-gle switch of enhanced voltage rating or current capability. The number of switch-ing elements as defined by their function in the power converter remains un-changed.

Embodiments of the present invention are now described with reference to the ac-companying drawings to which the invention is not limited. The illustrations of the drawings are in schematic form.
Fig. 1 illustrates a LLC type DC/DC converter,
Figs. 2 and 3 illustrate parts of the control scheme used in the DC/DC converter.

The DC/DC converter 10 of an embodiment of the invention comprises upper and lower primary side DC terminals 12, 13. A capacitor series of an upper and lower capacitor 15, 16 is connected between the DC terminals 12, 13. The connection point of the two capacitors 15, 16 forms a middle node 17.

The DC/DC converter 10 further comprises three first half-bridges being formed by semiconductor switches S1, S2, S5, S6, S9, S10. The first half-bridges are connect-ed in parallel between the upper primary side DC terminal 12 and the middle node 17. In other words, the first half-bridges are connected in parallel to the upper ca-pacitor 15.

The DC/DC converter 10 further comprises three second half-bridges being formed by semiconductor switches S3, S4, S7, S8, S11, S12. The lower nodes of the second half-bridges are connected to the lower primary side DC terminal 13. The upper node of each of the second half-bridges is connected to a respective first half-bridge midpoint.

In the present example the semiconductor switches S1... S12 are MOSFETs but in other embodiments different types of switches may be used such as IGBTs. The switches S3, S4, S7, S8, S11, S12 of the second half-bridges must be rated for a voltage of at least the input voltage VDC at the DC terminals 12, 13 while the other switches S1, S2, S5, S6, S9, S10 may be rated for half that voltage.

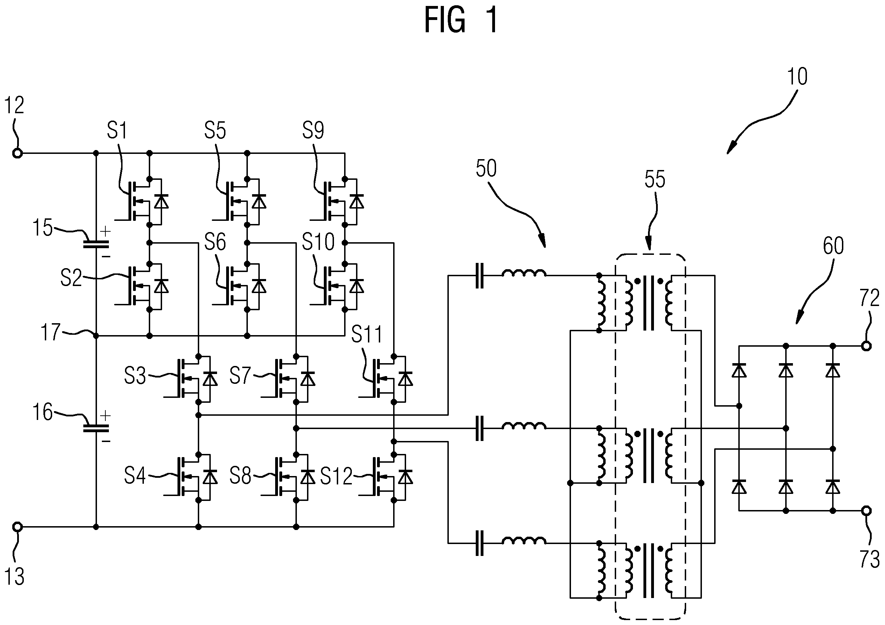

The midpoints of the second half-bridges are connected to a network 50 comprising primary coils of a three-phase transformer 55. The network 50 also comprises ca-pacitors and inductors. While at least the primary coils of transformer 55 are formed by physical coils, the other parts of network 50 may partly or fully be formed from stray capacitance and/or stray inductance values of the transformer 55 and surrounding connection lines and thus not be distinct physical devices as drawn in figure 1.

With the elements of the network 50 shown in figure 1, the DC/DC converter 10 is preferentially operated as an LLC type converter. The principles of operating as an LLC type converter are known in the art and the following description focuses on aspects that extend beyond those principles. While an LLC converter is a resonant converter, embodiments of the present invention need not be LLC type converters nor do they need to be resonant converters.

The secondary coils of transformer 55 are connected to the midpoints of a diode bridge rectifier 60. The upper and lower terminals of the diode rectifier form the secondary side DC terminals 72, 73 of the DC/DC converter 10. The DC/DC convert-er 10 of figure 1 is, through the use of diode rectifier 60, a unidirectional converter. Thus, the primary side DC terminals 12, 13 form input terminals while the second-ary side DC terminals 72, 73 form output terminals. Other embodiments of the in-vention may use an active rectifier, e.g. in the form of a semiconductor switch full bridge instead of the diode rectifier 60 to form a bidirectional DC/DC converter where the DC terminals 12, 13, 72, 73 have no distinction as input or output termi-nals. In the following text, the secondary side voltage will be called output voltage VO.

Based on the ratio of the primary side voltage VDC and the output voltage VO the DC/DC converter uses one of two operating modes. The operating modes are en-acted by a control circuit of the converter 10 that is not shown in figure 1. The con-trol circuit controls the switches S1...S12.

Broadly speaking, in the first operating mode, the full voltage range of the input voltage VDC is used to generate the AC voltage at the primary side of transformer 55 while in the second operating mode, only half that range (VDC/2) is used to generate the AC voltage at the primary side of transformer 55.

In the first operating mode, the voltage at the midpoints of the second half-bridges is alternated between at least two voltages by using different switching states. It is apparent to the skilled person that while the switching scheme is the same for the three phase legs, the immediate switching states are not usually the same.

In a first switching state the upper switches S1, S3, S5, S7, S9, S11 of both the first and second half-bridges are turned on while the lower switches S2, S4, S6, S8, S10, S12 are turned off. This switching state applies the voltage VDC (relative to the lower primary side DC terminal 13) of the upper primary side DC terminal 12 to the mid-point of the second half-bridge.

To apply a voltage of 0 V relative to the lower primary side DC terminal 13, the re-verse of the first switching state is used, i.e. the upper switches S1, S3, S5, S7, S9, S11 of both the first and second half-bridges are turned off while the lower switches S2, S4, S6, S8, S10, S12 are turned on.

Alternating between the switching states is performed at a switching frequency that is usually above 10 kHz, e.g. 28 kHz.

In some embodiments of the invention, a voltage of VDC/2 can be employed as a third voltage level in the first operating mode using further switching states as will be described below for the second operating mode.

In the second operating mode, the voltage at the midpoints of the second half-bridges is alternated between exactly two voltages by using a more complicated control scheme than in the first operating mode. The voltage difference between the two voltages is equal to the voltage of either of the two capacitors 15, 16, ideally VDC/2.

To alternate using the voltage of the upper capacitor 15, the upper switches S3, S7, S11 of the second half-bridges are turned on while their lower switches S4, S8, S12 are turned off. This state of the second half-bridges is kept for a time that is longer than the switching period at the switching frequency (e.g. 1/28 kHz). This provides a direct connection of the midpoints of the first half-bridges to the transformer 55.

The switches S1, S2, S5, S6, S9, S10 of the first half-bridges are switched at the switching frequency to alternate between the two voltages of the terminals of the upper capacitor 15 (VDC/2 and VDC, relative to the lower primary side DC terminal 13).

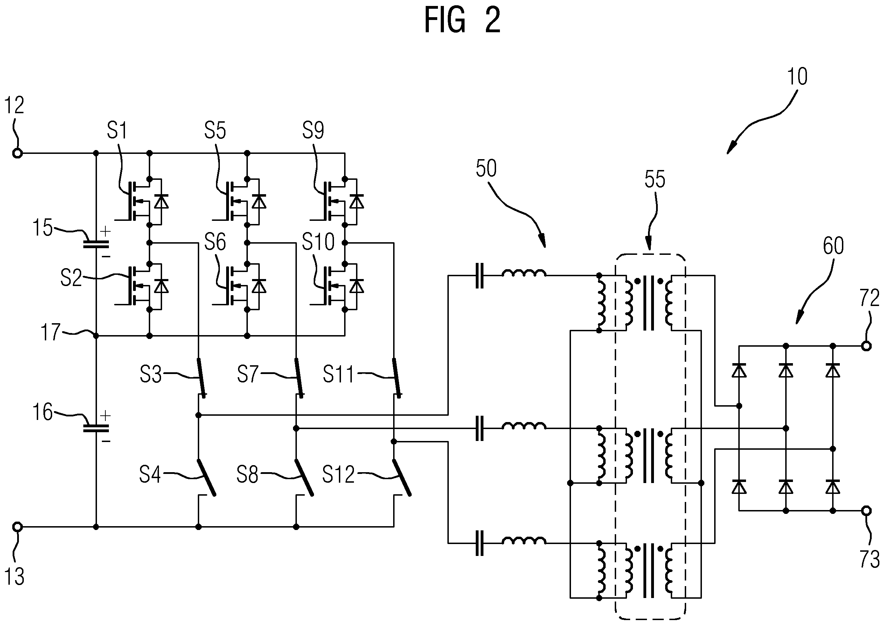

Figure 2 illustrates this control scheme. In figure 2, the switches of the second half-bridges are drawn as if they were mechanical switches in a fixed state to show that the second half-bridges remain in their state for longer than the first half-bridges.

To alternate using the voltage of the lower capacitor 16, the upper switches S1, S5, S9 of the first half-bridges are turned off while their lower switches S2, S6, S10 are turned on. This state of the first half-bridges is kept for a time that is longer than the switching period at the switching frequency. This applies the voltage of the middle node 17 to the upper terminals of the second half-bridges.

The switches S3, S4, S7, S8, S11, S12 of the second half-bridges are switched at the switching frequency to alternate between the two voltages of the terminals of the lower capacitor 16 (0 and VDC/2, relative to the lower primary side DC terminal 13).

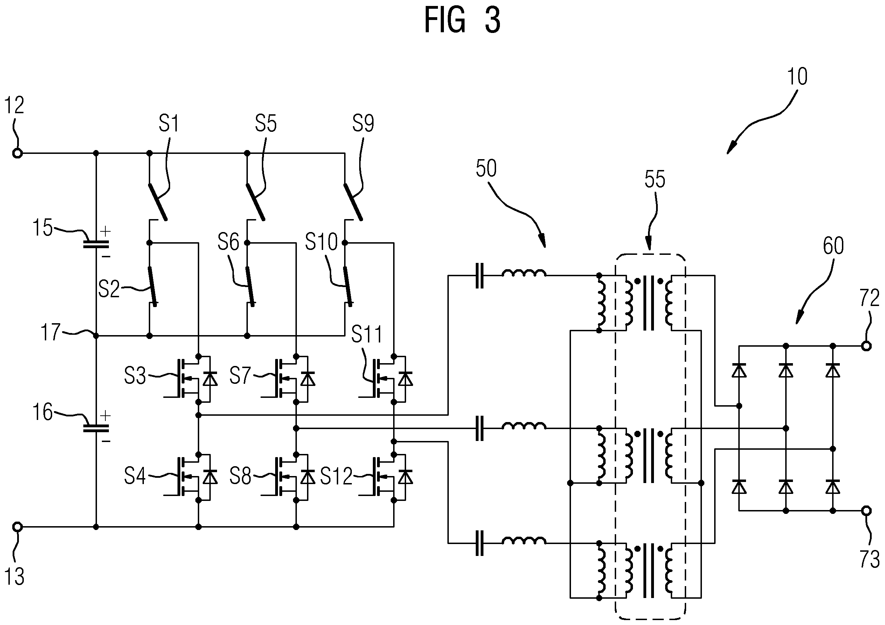

Figure 3 illustrates this control scheme. Similarly to figure 2, in figure 3 the switches of the first half-bridges are drawn as if they were mechanical switches in a fixed state to show that they remain in their state for longer than the switching period while the second half-bridges perform rapid switching.

The degree of freedom that is given with respect to using the voltage of either of the capacitors 15, 16 should be used to balance the voltage of the capacitors 15, 16, i.e. to keep their voltages at essentially VDC/2. Switching between the two capacitors is performed substantially slower than the switching frequency.

It is expected that switching between the two operating modes happens substantial-ly slower than switching between the two capacitors in the second operating mode.

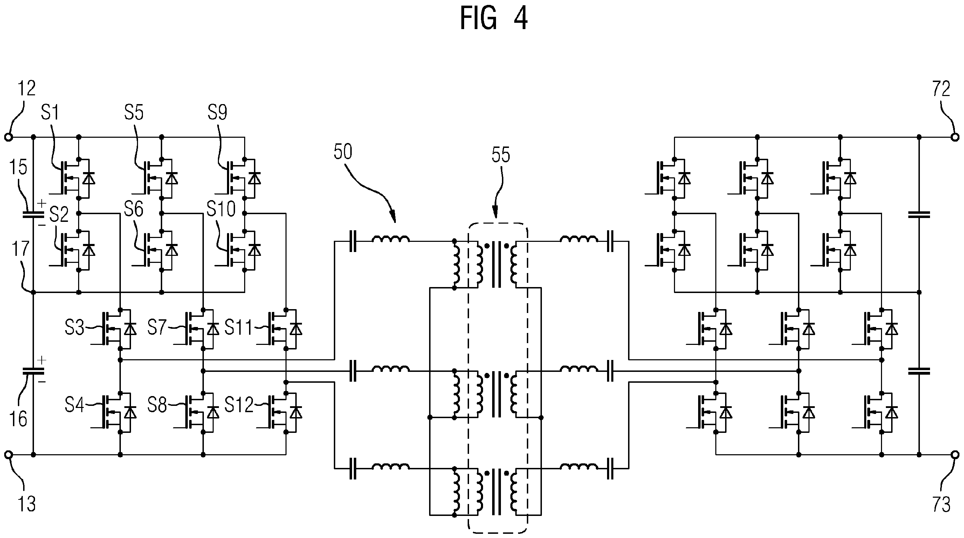

Figure 4 shows a variation on the embodiment of figure 1. Power converter 110 largely comprises the elements of the power converter 10 of figure 1. Instead of using the diode bridge rectifier 60, the secondary side of power converter 110 is built largely like the primary side, making the power converter 110 substantially symmetrical. The DC/DC converter 110 of figure 4 is bi-directional, i.e., it can sup-port power flow in both directions.

The secondary side may operate like the primary side, i.e. switch between operating modes and therefore operate at two different voltage levels. Since the voltage on both sides can be switched between full and half the respective DC terminal voltag-es, there are now three voltage ratios of output over input voltage at which optimal efficiency is achieved, namely 2, 1 and 0.5 (multiplied by the transformer winding ratio).

### List of reference numbers

- 10, 110: DC/DC power converter
- 12, 13: primary side DC terminals
- 15, 16: upper and lower capacitor
- 17: middle node
- S1...S12: semiconductor switch
- 50: network
- 55: transformer
- 60: diode bridge rectifier
- 72, 73: secondary side DC terminals

## Claims

1. An isolated DC/DC power converter (10, 110) arranged for power conversion be-tween primary side DC terminals (12, 13) and secondary side DC terminals (72, 73), comprising:
- a capacitor series of two capacitors (15, 16) arranged between the primary side DC terminals (12, 13) of the power converter (10, 110),
- three first half-bridges of two semiconductor switches (S1, S2, S5, S6, S9, S10) each, the half-bridges being arranged in a parallel connection between the upper primary side DC terminal (12) and the midpoint of the capacitors (15, 16),
- three second half-bridges of two semiconductor (S3, S4, S7, S8, S11, S12) switch-es each, each second half bridge being connected between the lower primary side DC terminal (13) and the midpoint of a respective first half-bridge,
- a three-phase transformer (55), its primary side being connected to the midpoints of the second half-bridges,
- a rectifier circuit (60) connected to the secondary side of the transformer (55),
- a control circuit configured to
-- operate the semiconductor switches (S1...S12) of the half-bridges to create an AC voltage on the primary side of the transformer (55) using a first operating mode and a second operating mode,
-- in the first operating mode, create the AC voltage by alternating between two or more voltage levels at the midpoints of the second half-bridges that include the voltages at the primary side DC terminals (12, 13),
-- in the second operating mode, create the AC voltage by alternating between two voltage levels at the midpoints of the second half-bridges that have a voltage differ-ence of half the voltage between the primary side DC terminals.

2. The isolated DC/DC power converter (10, 110) of claim 1, wherein the control cir-cuit is configured to, in the second operating mode, create the AC voltage by alter-nating between exactly two voltage levels at the midpoints of the second half-bridges that are the DC voltage at the lower primary side DC terminal (13) and the voltage of one of the capacitors (15, 16).

3. The isolated DC/DC power converter (10, 110) of claim 1 or 2, wherein the control circuit is configured to, in the first operating mode, create the AC voltage by alter-nating between exactly two voltage levels at the midpoints of the second half-bridges that are the voltages at the primary side DC terminals (12, 13).

4. The isolated DC/DC power converter (10, 110) of claim 1 or 2, wherein the control circuit is configured to, in the first operating mode, create the AC voltage by alter-nating between exactly three voltage levels at the midpoints of the second half-bridges that are the voltages at the primary side DC terminals (12, 13) and the volt-ages of the capacitors (15, 16).

5. The isolated DC/DC power converter (10) of any of the preceding claims, wherein the rectifier circuit (60) is a diode bridge (60).

6. The isolated DC/DC power converter (10, 110) of any of the claims 1 to 4, wherein the rectifier circuit (60) is an active rectifier.

7. The isolated DC/DC power converter (10, 110) of any of the preceding claims, wherein the control circuit is configured to, in the second operating mode, apply the voltage of one of the capacitors (15, 16) by operating the semiconductor switches (S1...12) of either the first half-bridges or the second half-bridges at a first switching frequency of at least 1 kHz, particularly at least 10 kHz.

8. The isolated DC/DC power converter (10, 110) of claim 7, wherein the control cir-cuit is configured to, in the second operating mode, alternating between switching the first half-bridges or the second half-bridges to keep the capacitors (15, 16) at a substantially equal voltage.

9. The isolated DC/DC power converter (10, 110) of any of the preceding claims, wherein the control circuit is configured to, in the second operating mode, alternate between the voltage levels at the terminals of the upper capacitor (15) by
- switching the semiconductor switches (S1, S2, S5, S6, S9, S10) of the first half-bridges at the first switching frequency,
- turning on the upper switches (S3, S7, S11) of the second half-bridges,
- turning off the lower switches (S4, S8, S12) of the second half-bridges.

10. The isolated DC/DC power converter (10, 110) of any of the preceding claims, wherein the control circuit is configured to, in the second operating mode, alternate between the voltage levels at the terminals of the lower capacitor (16) by
- switching the semiconductor switches (S3, S4, S7, S8, S11, S12) of the second half-bridges at the first switching frequency,
- turning on the lower switches (S2, S6, S10) of the first half-bridges,
- turning off the upper switches (S1, S5, S9) of the first half-bridges.

11. The isolated DC/DC power converter (10, 110) of any of the preceding claims, wherein the control circuit is configured to select the operating mode based on the input voltage and output voltage at the primary side and secondary side DC termi-nals, particularly based on a comparison between the ratios of input and output voltage for both operating modes with the turn ratio of the transformer (55).
